# DEMANDE DE BREVET EUROPEEN

(11) **EP 0 719 935 A1**
(43) Date de publication de la demande: **03.07.1996**
(21) Numéro de dépôt: 95402896.5
(22) Date de dépôt: 21.12.1995
(51) Int. Cl.: F02K 9/44, F02K 9/50

(54) **Autopressurisation de réservoir**

(30) Priorité: 27.12.1994 FR 9415695
(71) Demandeur: SOCIETE EUROPEENNE DE PROPULSION, F-92150 Suresnes (FR)
(72) Inventeur: Koppel, Christophe, F-77176 Nandy (FR)
(74) Mandataire: Thévenet, Jean-Bruno

(57) **Abrégé**

L'invention concerne un dispositif de pressurisation d'au moins un réservoir d'ergol alimentant les organes de combustion d'un engin spatial, le ou les réservoirs (10, 12) étant reliés à une ou plusieurs canalisations (14, 16) d'alimentation de ces organes de combustion, et l'un au moins de ces ergols étant un ergol décomposable thermiquement ou catalytiquement, ce dispositif comportant : des moyens de prélèvement (18) placés en sortie du réservoir d'ergol décomposable (10) pour prélever une partie de cet ergol, des moyens de génération d'un gaz d'entraînement (22) pour délivrer des gaz d'entraînement, des moyens de soutirage (20, 24) formés par une tuyère convergente-divergente reliée d'une part aux moyens de génération d'un gaz d'entraînement (22) et d'autre part aux moyens de prélèvement (18) pour, en abaissant la pression des gaz d'entraînement jusqu'à une valeur inférieure à celle nécessaire à la pressurisation du ou des réservoirs, soutirer l'ergol décomposable des moyens de prélèvement, et des moyens de décomposition (20, 26) placés en sortie des moyens de soutirage qui, à partir de cet ergol soutiré, assure sa décomposition en un gaz de pressurisation pour la pressurisation du ou des réservoirs (10,12).

## Description

### Domaine de l'invention

La présente invention concerne des dispositifs de pressurisation de réservoirs d'ergol d'engins spatiaux de tous types, notamment des lanceurs manoeuvrants, et plus particulièrement ceux pour lesquels on souhaite fournir des gaz en quantités variables avec plus de sécurité, plus de performances et une plus grande possibilité de variation de débit.

### Art antérieur

Classiquement, la pressurisation des réservoirs d'ergol est assurée à partir de capacités haute pression contenant un gaz de pressurisation inerte (par exemple de l'hélium) et reliées aux réservoirs d'ergols par l'intermédiaire de détendeurs.

Toutefois, ces dispositifs classiques ont l'inconvénient d'une part de présenter une masse importante qui en limite l'utilisation pour les petits systèmes de propulsion et d'autre part de poser des problèmes de sécurité compte tenu des hautes pressions mises en jeu dans ces capacités.

Le brevet US 3740945 (Thiokol Chemical Corporation, Joseph J. Lovingham), a tenté d'apporter une solution à la présence préjudiciable, dans certaines applications, de ces capacités sous haute pression, en proposant de réaliser la pressurisation des réservoirs d'ergol directement à partir de gaz chauds et non plus des gaz froids issus de ces capacités externes sous pression. Ces gaz sont obtenus à partir d'un piston différentiel dont le volume en avant de sa face active est rempli d'un ergol décomposable catalytiquement (comme le peroxyde d'hydrogène). Le déplacement du piston sous l'action d'un dispositif de mise à feu (bloc de poudre) provoque l'injection de cet ergol dans un générateur de gaz à l'intérieur duquel il est décomposé sur un lit catalytique (à base d'argent par exemple) en gaz chauds qui iront pressuriser directement les réservoirs d'ergols.

Cette structure n'est encore cependant pas exempte de défauts. En effet, du fait de la présence de joints au niveau du piston différentiel, l'étanchéité et donc la pérennité d'un tel système pour des durées de stockage importantes n'est pas garanti, ce qui est particulièrement préjudiciable pour les dispositifs dans lesquels on souhaite que la pressurisation des réservoirs ne soit mise en oeuvre qu'après une durée relativement grande. En outre, il est nécessaire de dimensionner le volume d'ergol dans le piston en fonction de la durée totale de la mission réalisée par l'engin spatial ce qui rend ce système encombrant. De plus, tout comme le ou les réservoirs principaux, l'ergol contenu dans le piston différentiel doit être traité avec le même souci de sécurité, ce qui exige principalement l'emploi d'un détecteur de fuite à logique triple majoritaire ou encore d'un orifice de remplissage rendu étanche de manière redondante, par exemple.

### Définition de l'invention

La présente invention se propose donc de réaliser un système de pressurisation de réservoirs d'ergol à partir de gaz chauds qui ne présente pas les inconvénients de l'art antérieur et convienne particulièrement pour des systèmes performants (donc à masse réduite) exigeant une grande sécurité (pas de capacités sous haute pression) comme un stockage de longue durée en espace ou au sol.

Ces buts sont atteints par un dispositif de pressurisation d'au moins un réservoir d'ergol alimentant les organes de combustion d'un engin spatial, le ou les réservoirs étant reliés à une ou plusieurs canalisations d'alimentation de ces organes de combustion, caractérisé en ce que, l'un au moins de ces ergols étant un ergol décomposable thermiquement ou catalytiquement, il comporte : des moyens de prélèvement placés en sortie du réservoir d'ergol décomposable pour prélever une partie de cet ergol, des moyens de génération d'un gaz d'entraînement pour délivrer des gaz d'entraînement, des moyens de soutirage formés par une tuyère convergente-divergente reliée d'une part aux moyens de génération d'un gaz d'entraînement et d'autre part aux moyens de prélèvement pour, en abaissant la pression des gaz d'entraînement jusqu'à une valeur inférieure à celle nécessaire à la pressurisation du ou des réservoirs, soutirer l'ergol décomposable des moyens de prélèvement, et des moyens de décomposition placés en sortie des moyens de soutirage qui, à partir de cet ergol soutiré, assure sa décomposition en un gaz de pressurisation pour la pressurisation du ou des réservoirs.

En assurant la pressurisation des réservoirs d'ergol directement à partir de ces mêmes réservoirs (d'où le terme d'auto-pressurisation donné au dispositif par l'inventeur), on évite le recours à des capacités externes sous haute pression (augmentation de la sécurité) ou à des dispositifs annexes complémentaires (augmentation des performances et de la fiabilité) tels que des pistons différentiels qui augmentent la masse totale embarquée et qui comportent en outre des pièces mobiles présentant des risques de grippage. La pérennité du stockage comme la sécurité sont ainsi garantis, ce qui confère une très grande performance à l'engin spatial qui dispose d'un tel circuit de pressurisation.

Les moyens de génération d'un gaz d'entraînement peuvent être constitués directement par un générateur de gaz de l'engin spatial ou de préférence par une cartouche de poudre fournissant un débit de combustion constant ou lentement variable.

La tuyère convergente-divergente recevant les gaz d'entraînement des moyens de génération s'ouvre sur une chambre de détente à l'intérieur de laquelle l'ergol décomposable est amené par une tubulure d'injection. La tubulure d'injection de l'ergol décomposable peut présenter un orifice de sortie dirigé dans le sens opposé à l'écoulement des gaz d'entraînement, un déflecteur placé en regard de cet orifice de sortie permettant de retourner cet ergol dans le sens de l'écoulement des gaz d'entraînement. Dans une variante de réalisation préférentielle, cette tubulure d'injection de l'ergol décomposable peut présenter un ou plusieurs orifices de sortie débouchant annulairement dans la chambre de détente dans une direction sensiblement tangentielle à l'écoulement des gaz d'entraînement.

Selon différents modes de réalisation, la chambre de détente peut être fermée par un col subsonique débouchant directement dans une conduite de pressurisation ou par un col supersonique débouchant également dans une conduite de pressurisation.

En outre, des moyens de régulation sont prévus pour assurer un équilibre des pressions dans l'ensemble du circuit de pressurisation. Ces moyens de régulation peuvent comporter un clapet anti-retour ou bien encore une vanne électrique dont l'ouverture est réalisée par un circuit de commande en réponse aux valeurs de pression existant aux bornes de cette vanne et délivrées par des capteurs amont et aval.

Un dispositif d'initialisation peut être également prévu pour permettre la pressurisation initiale du ou des réservoirs d'ergol . La présence d'un tel dispositif d'initialisation dépend des performances de l'engin, notamment de la durée de la phase d'initialisation (durée pour passer d'un état de stockage hors pression à un état opérationnel avec une pression à son niveau nominal). Si l'on souhaite que cette durée soit très petite, il est possible de générer très rapidement des gaz chauds avec un bloc de poudre "booster" et donc d'initialiser rapidement le système. Au contraire, si la durée de la phase d'initialisation est moins "critique", ce bloc de poudre n'est plus indispensable et le dispositif peut suffire à lui seul pour assurer à la fois l'initialisation et la pressurisation dans un état opérationnel.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre un premier exemple de réalisation d'un système d'auto-pressurisation selon l'invention,
- la figure 2 représente un détail de la zone de soutirage d'ergol de la figure 1 ;
- la figure 3 montre un second exemple de réalisation d'un système d'auto-pressurisation selon l'invention,
- la figure 4 montre un troisième exemple de réalisation d'un système d'auto-pressurisation selon l'invention, et
- les figures 5 et 6 représentent un détail de la zone de soutirage d'ergol respectivement des figures 3 et 4.

### Description détaillée

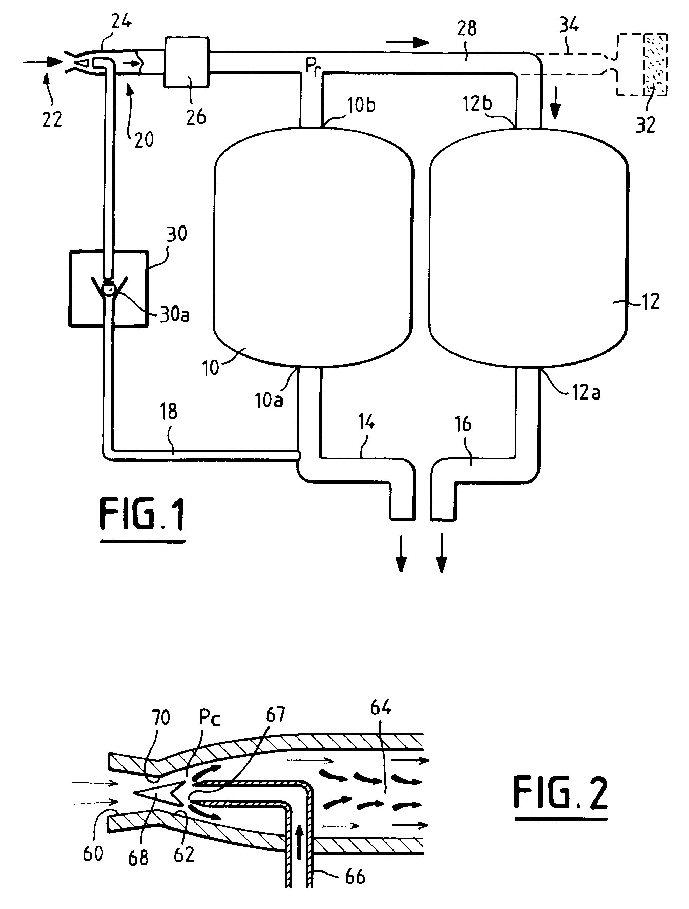

La figure 1 montre un exemple selon l'invention d'un système de pressurisation de réservoirs d'ergols, par exemple d'un engin spatial manoeuvrant. Afin de limiter la description aux seuls éléments caractéristiques de l'invention, les autres constituants de cet engin ont été volontairement omis, comme ses organes de combustion tels que les chambres de combustion de ses différents moteurs (avancement, freinage, attitude, déplacement latéraux), mais, bien évidemment, ils participent au fonctionnement général d'un tel engin spatial.

Dans l'exemple représenté, l'alimentation des moteurs est du type biergols liquides, avec un premier ergol disponible à partir d'un premier réservoir 10, cet ergol devant être décomposable thermiquement ou catalytiquement, par exemple du monométhylhydrazine (MMH) ou du diméthyl-hydrazine dissymétrique (UDMH), de l'hydrazine, ou encore de l'eau oxygénée et un second ergol disponible à partir d'un second réservoir 12 (par exemple du peroxyde d'azote N₂O₄ ou du kérozène).

Chacun de ces deux réservoirs 10, 12 possède un orifice de sortie 10a, 12a qui est relié à une canalisation 14, 16 d'alimentation des moteurs (non représentés). Une conduite 18 aboutissant dans la canalisation 14 en aval de l'orifice de sortie 10a du premier réservoir d'ergol décomposable ou vaporisable 10 permet un prélèvement d'une partie de cet ergol qui, après décomposition par des moyens de soutirage et de décomposition 20, fournira un gaz de pressurisation pour la pressurisation des réservoirs 10, 12, notamment celui dont il est directement issu, réalisant ainsi un circuit de pressurisation bouclé. Les moyens de soutirage et de décomposition 20 qui seront décrits en détail plus avant comportent des moyens 22 de génération d'un gaz d'entraînement, préférentiellement un gaz chaud, qui peuvent être constitués par un générateur de gaz de l'engin spatial, des moyens 24 de soutirage pour abaisser la pression des gaz ainsi obtenus à une pression inférieure à celles des réservoirs et ainsi permettre l'extraction de l'ergol prélevé, et des moyens 26 de décomposition en un gaz de l'ergol décomposable sous l'action de la chaleur apportée par les gaz d'entraînement et comportant éventuellement un lit catalytique ou thermique. Le gaz de pressurisation obtenu en sortie du décomposeur 26 est alors amené au niveau des orifices d'entrée de gaz 10b et 12b des réservoirs d'ergol 10, 12 par une conduite d'alimentation en gaz de pressurisation 28. Des moyens de régulation 30 placés sur le conduit de prélèvement 18 du premier ergol décomposable permettent de garantir un fonctionnement optimum du système en assurant un équilibre des pressions régnant dans le circuit de pressurisation. Selon la nature de la génération du gaz d'entraînement, il peut être nécessaire d'initialiser le fonctionnement du système d'auto-pressurisation en assurant une première pressurisation des réservoirs à partir d'un dispositif d'initialisation constitué d'un bloc de poudre "booster" 32 relié au conduit de pressurisation 28 par une canalisation 34 et dont la mise à feu va entraîner une première mise sous pression rapide des réservoirs.

La figure 2 montre en détail les moyens de soutirage 24 constitués par une tuyère convergente 60-divergente 62 qui précède une chambre de détente 64 dans laquelle sont introduits axialement les gaz d'entraînement, l'ergol décomposable étant introduit dans la chambre par une tubulure d'admission 66 coudée, profilée aérodynamiquement et protégée thermiquement et dont l'orifice de sortie 67 est dirigé dans le sens opposé à l'écoulement des gaz d'entraînement. Un déflecteur 68 dont la forme externe est déterminée pour perturber au minimum l'écoulement des gaz d'entraînement est relié à et est placé en sortie de cette tubulure 66 et permet de modifier le sens d'écoulement de l'ergol de telle sorte qu'il soit retourné dans le sens de l'écoulement des gaz d'entraînement. Ce déflecteur est placé directement au niveau du col 70 de la tuyère convergente-divergente.

La mise en oeuvre du dispositif selon l'invention peut être décrit simplement comme suit: lorsque le fonctionnement est initialisé, et qu'une pression suffisante de pressurisation des réservoirs Pr a été atteinte grâce aux gaz d'entraînement ou par un éventuel dispositif d'initialisation 32, les gaz d'entraînement générés par le générateur de gaz 22 et qui traversent la tuyère convergente-divergente sont accélérés au passage du col 70 et dans la tuyère divergente (la pression Pc de ces gaz est alors inférieure à la pression Pr) pour être ensuite décélérés de manière brutale (onde de choc) ou progressive dans la chambre de détente 64, ce qui permet corrélativement d'augmenter la pression statique et d'atteindre ainsi un niveau de pression en sortie de chambre supérieur ou égal à Pr. La différence de pression existant entre la chambre de détente en sortie de col ou dans la tuyère divergente et la conduite de prélèvement du premier ergol décomposable permet de soutirer naturellement cet ergol et donc de l'introduire dans la chambre de détente. Les moyens de décomposition 26 placés en sortie de cette chambre permettent ensuite de transformer l'ergol prélevé en un gaz (cette tranformation pouvant être favorisée par la chaleur apportée par les gaz d'entraînement lorsque ceux-ci sont chauds) pour la pressurisation directe des réservoirs 10, 12. Les moyens de régulation 30, simple clapet anti-retour 30a (aussi utile en phase d'initialisation) ou circuit électronique de commande comme il sera montré plus avant, permettent de garantir un fonctionnement correct de l'ensemble du dispositif.

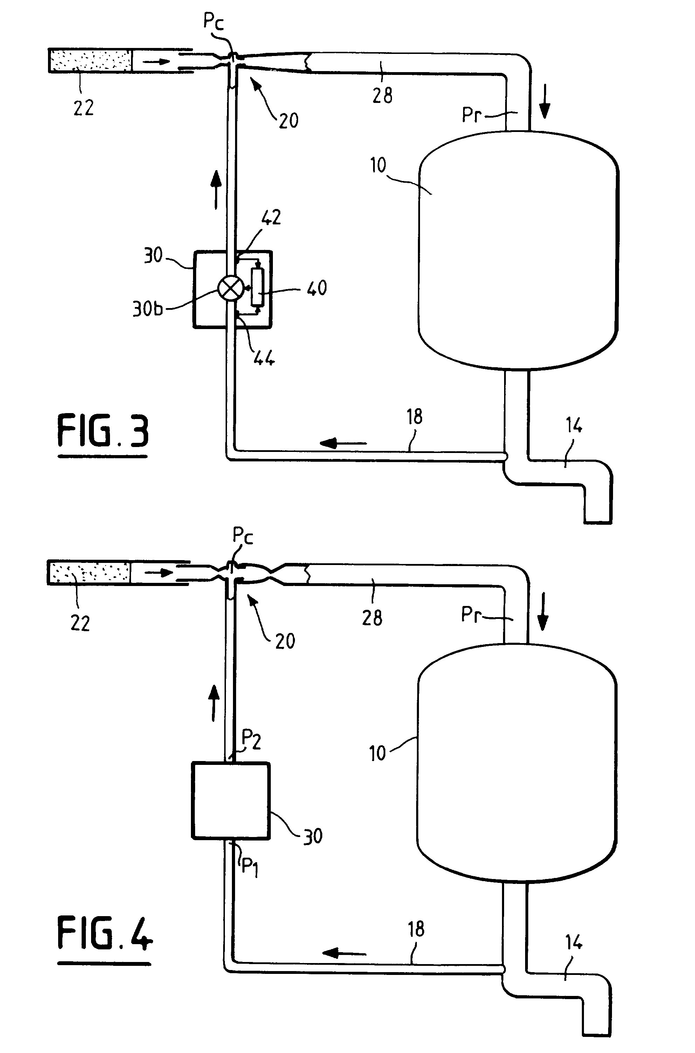

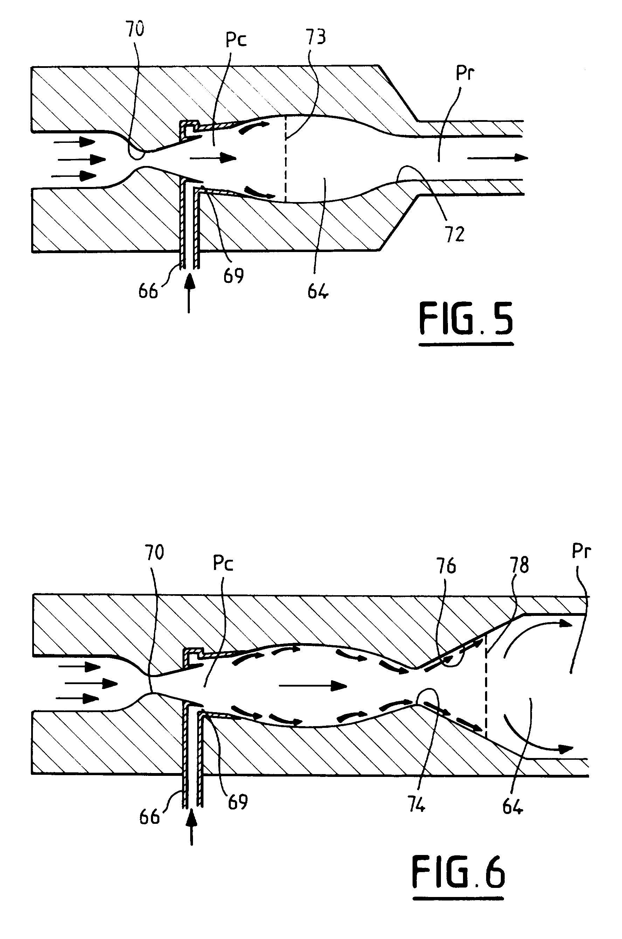

La figure 3 montre un autre exemple de réalisation d'un système d'auto-pressurisation selon l'invention dans lequel les moyens de génération des gaz d'entraînement sont constitués par une cartouche de poudre dite à combustion cigarette 24 (c'est-à-dire fournissant un débit constant ou lentement variable) et dont la durée de combustion est calculée pour correspondre précisément à la durée maximale de la mission assignée à l'engin spatial. Les moyens de régulation 30 comportent dans cette variante de réalisation une vanne électrique 30b dont l'ouverture est commandée par un circuit électronique de commande 40 en fonction des pressions déterminées en amont et en aval de cette vanne par des capteurs de pression 42 et 44. Les moyens de soutirage 24 et les moyens de décomposition 26 sont constitués par une unique chambre de détente dont l'entrée est constituée par un col sonique 70 et qui, dans l'exemple représenté, joue aussi un rôle de chambre de décomposition. En effet, les sections du col de la tuyère et de la sortie de la chambre de détente sont ici prédéterminées pour créer une onde de choc en aval de ce col sonique et ainsi entraîner une décomposition rapide du premier ergol décomposable sous l'effet des gaz chauds d'entraînement. La figure 5 montre plus précisément un exemple de réalisation de la zone de soutirage de l'ergol décomposable avec une tubulure d'admission 66 qui comporte un ou plusieurs orifices de sortie 69 disposé annulairement sensiblement tangentiellement à l'écoulement des gaz d'entraînement en aval du col sonique 70 et une chambre de détente qui, dans cet exemple, est fermée par un second col subsonique 72 constituant l'entrée du conduit de pressurisation 28. Dans cette configuration, l'onde de choc matérialisée par la ligne en pointillée référencée 73 est créée en amont du second col subsonique mais bien sûr en aval du premier col sonique. La position de l'onde de choc 73 dépend des valeurs des pressions et corrélativement, peut permettre une régularisation des pression de façon automatique. En effet, en cas de surpression dans la chambre 64, l'onde de choc peut se déplacer en amont des orifices 69 et provoquer l'arrêt de l'injection.

Dans le mode de réalisation de la figure 4, les dimensions de la chambre de détente qui est ici également une chambre de décomposition sont déterminées de telle sorte que celle-ci présente une structure à double col avec un premier col sonique 70 et un second col supersonique 74 et un divergent de sortie 76 au niveau duquel se produit l'onde de choc (figure 6 référence 78). Comme dans les modes de réalisation précédents, des moyens de régulation 30 placés dans la conduite de prélèvement de l'ergol décomposable 18 permettent d'assurer un contrôle des différentes pressions existant au sein de la boucle de pressurisation. Notamment lorsque la pression P₁ mesurée en amont des moyens de régulation par le capteur 44 est supérieure à la pression P₂ mesurée en aval des moyens de régulation par le capteur 42, la vanne électrique 30b peut s'ouvir. Cette ouverture est commandée par le circuit de commande 40 si de plus la pression P₁ est inférieure à une pression de consigne prédéterminée. L'ouverture de la vanne 30b permet l'injection de l'ergol décomposable dans la chambre de détente et de décomposition où il va se décomposer entrainant une augmentation de pression dans la chambre 64 (Pr augmente). Cette augmentation de pression est alors répercutée au niveau de la pression P₁ qui en devenant supérieure à une pression de consigne prédéterminée provoque la fermeture de la vanne 30b par le circuit de commande 40. Pour éviter certains risques d'instabilité de la boucle de commande, des durées d'inhibition peuvent classiquement être prévues dans la logique du circuit de commande 40.

Au fur et à mesure de l'utilisation du système propulsif alimenté à partir des réservoirs 10 et 12, la pression P1 redevient inférieure à une pression de consigne prédéterminée, ce qui provoque à nouveau l'ouverture de la vanne 30b par le circuit de commande 40 enclenchant un autre cycle.

De par sa compacité et la sécurité qu'il procure, le circuit de pressurisation décrit est particulièrement adapté aux engins spatiaux comme à tous dispositifs nécessitant un stockage d'ergol sans utilisation pendant une durée importante.

## Revendications

1. Dispositif de pressurisation d'au moins un réservoir d'ergol alimentant les organes de combustion d'un engin spatial, le ou les réservoirs (10, 12) étant reliés à une ou plusieurs canalisations (14, 16) d'alimentation de ces organes de combustion, caractérisé en ce que, l'un au moins de ces ergols étant un ergol décomposable thermiquement ou catalytiquement, il comporte : des moyens de prélèvement (18) placés en sortie du réservoir d'ergol décomposable (10) pour prélever une partie de cet ergol, des moyens de génération d'un gaz d'entraînement (22) pour délivrer des gaz d'entraînement, des moyens de soutirage (20, 24) formés par une tuyère convergente-divergente (60, 70, 62) reliée d'une part aux moyens de génération d'un gaz d'entraînement (22) et d'autre part aux moyens de prélèvement (18) pour, en abaissant la pression des gaz d'entraînement jusqu'à une valeur inférieure à celle nécessaire à la pressurisation du ou des réservoirs, soutirer l'ergol décomposable des moyens de prélèvement, et des moyens de décomposition (20, 26) placés en sortie des moyens de soutirage qui, à partir de cet ergol soutiré, assure sa décomposition en un gaz de pressurisation pour la pressurisation du ou des réservoirs (10, 12).

2. Dispositif de pressurisation selon la revendication 1, caractérisé en ce que lesdits moyens de génération d'un gaz d'entraînement sont constitués par un générateur de gaz de l'engin spatial.

3. Dispositif de pressurisation selon la revendication 1, caractérisé en ce que lesdits moyens de génération d'un gaz d'entraînement sont constitués par une cartouche de poudre fournissant un débit de combustion constant ou lentement variable.

4. Dispositif de pressurisation selon la revendication 1, caractérisé en ce que ladite tuyère convergente-divergente (60, 70, 62) recevant les gaz d'entraînement des moyens de génération (22) s'ouvre sur une chambre de détente (64) à l'intérieur de laquelle l'ergol décomposable est amené par une tubulure d'injection (66).

5. Dispositif de pressurisation selon la revendication 4, caractérisé en ce que ladite tubulure d'injection de l'ergol décomposable présente un orifice de sortie (67) dirigé dans le sens opposé à l'écoulement des gaz d'entraînement, un déflecteur (68) placé en regard de cet orifice de sortie permettant de retourner cet ergol dans le sens de l'écoulement des gaz d'entraînement.

6. Dispositif de pressurisation selon la revendication 4, caractérisé en ce que ladite tubulure d'injection de l'ergol décomposable présente un ou plusieurs orifices de sortie (69) débouchant annulairement dans la chambre de détente (64) dans une direction sensiblement tangentielle à l'écoulement des gaz d'entraînement.

7. Dispositif de pressurisation selon la revendication 4, caractérisé en ce que ladite chambre de détente est fermée par un col subsonique (72) débouchant dans une conduite de pressurisation (28).

8. Dispositif de pressurisation selon la revendication 4, caractérisé en ce que ladite chambre de détente est fermée par un col supersonique (74) débouchant dans une conduite de pressurisation (28).

9. Dispositif de pressurisation selon l'une quelconque des revendications 1 à 8, caractérisé en ce qu'il comporte en outre des moyens de régulation (30) destinés à assurer un équilibre des pressions dans l'ensemble du circuit de pressurisation (10 et 12, 14, 18, 20, 28).

10. Dispositif de pressurisation selon la revendication 9, caractérisé en ce que lesdits moyens de régulation sont constitués d'un clapet anti-retour (30a).

11. Dispositif de pressurisation selon la revendication 9, caractérisé en ce que lesdits moyens de régulation comportent une vanne électrique (30b) dont l'ouverture est réalisée par un circuit de commande (40) en réponse aux valeurs de pression existant aux bornes de cette vanne et délivrées par des capteurs amont (44) et aval(42).

12. Dispositif de pressurisation selon l'une quelconque des revendications 1 à 11, caractérisé en ce qu'il comporte en outre un dispositif d'initialisation pour permettre la pressurisation initiale du ou des réservoirs d'ergol (10, 12).
